# EUROPÄISCHE PATENTSCHRIFT

(11) **EP 0 271 955 B1**
(45) Veröffentlichungstag und Bekanntmachung des Hinweises auf die Patenterteilung: **19.05.1993**
(21) Anmeldenummer: 87202475.7
(22) Anmeldetag: 10.12.1987
(51) Int. Cl.: H04J 3/06, H04L 7/00

(54) **Schaltungsanordnung zur Synchronisation von Einrichtungen in den Vermittlungs- ud Verstärkerstellen eines Zeitmultiplex-Übertragungssytems**
Circuit for the synchronization of devices in exchange and amplifier stations in a time division transmission system
Circuit pour la synchronisation de dispositifs dans des centraux et des stations d'amplification d'un système de transmission par répartition dans le temps

(30) Priorität: 17.12.1986 DE 3643002
(43) Veröffentlichungstag der Anmeldung: 22.06.1988
(73) Patentinhaber: Philips Patentverwaltung GmbH, 22335 Hamburg (DE); Philips Electronics N.V., 5621 BA Eindhoven (NL)
(72) Erfinder: Keilholz, Heinz, D-8501 Heroldsberg (DE)
(74) Vertreter: Peuckert, Hermann, Dipl.-Ing.

(56) Entgegenhaltungen:
- EP-A- 0 107 236
- US-A- 3 859 466
- US-A- 3 936 604
- US-A- 4 466 110

## Beschreibung

Die Erfindung betrifft eine Schaltungsanordnung zur Synchronisation von Einrichtungen in den Vermittlungs- und Verstärkerstellen eines Zeitmultiplex-Übertragungssystems gemäß dem Oberbegriff des Patentanspruchs 1.

In Orts- und Bezirksnetzen werden in zunehmendem Maße Zeitmultiplex-Übertragungssysteme eingesetzt. Im Netz der Deutschen Bundespost wird zur Nachrichtenübertragung ein hierarchisches, digitales Übertragungssystem benutzt. In der niedrigsten Hierarchiestufe wird das Übertragungssystem PCM 30 F eingesetzt. Für die Übertragung der Schaltkennzeichen sind in den Vermittlungsstellen und Verstärkerstellen sogenannte Kennzeichenumsetzergeräte vorgesehen.

Das Kennzeichenumsetzergerät erfüllt neben der Umsetzerfunktion, wie beispielsweise Aufnahme oder Abgabe von Gleichstromzeichen und Bildung oder Rückwandlung der Zeitmultiplexsignale, unter anderem auch die vermittlungstechnischen Aufgaben wie Auswerten und Formen der Schaltkennzeichen nach den Bedingungen der jeweils angeschlossenen Vermittlungseinrichtungen, Umwandeln unterschiedlicher Kennzeichen für Orts- und Fernverkehr oder für End- und Durchgangsverkehr in einheitliche Kennzeichensignale für die Übertragung auf PCM-Strecken, Verarbeiten der Schaltkennzeichen, zum Beispiel Zeichenkorrektur, Speicherung und Neubildung von Zeichen usw.. Von der Funktion her wird das Kennzeichenumsetzergerät in einen zentralen Kennzeichenumsetzer (erste Einrichtung) und den jeweils 30 Kanaleinheiten (zweite Einrichtungen) gegliedert. Das Kennzeichenumsetzergerät nimmt dabei die Schaltkennzeichen von den Sprech- und Signaladern der Wähler auf, verarbeitet diese für alle 30 Fernsprechkanäle im zentralen Kennzeichenumsetzer und bündelt diese zu einem Zeitmultiplexsignal mit einer Bitfolgefrequenz von 64 kbit/s.

Die Funktion eines solchen Kennzeichenumsetzergeräts ist ausführlich in TE KA DE Technische Mitteilungen 1982, Seiten 20 bis 27, "Das Systemgerät PCM 30 F", näher beschrieben und erläutert. Im Abschnitt 5.4 "KZU-Taktversorgung (TVSK)" ist angegeben, daß der im zentralen Kennzeichenumsetzer angeordnete Grundtakt-Generator mit einer Teilerschaltung verbunden ist, welche alle für die zentrale Verarbeitung und die PCM 30 F-Pulsrahmenbildung erforderlichen Takte von 2048 KHz bis 500 Hz liefert. Durch Verknüpfung entsprechender Teile dieser Takte miteinander, werden die Kanalansteuertakte KAT1...30 für die kanalzeitrichtige Ansteuerung der Kanaleinheiten gebildet. Die verschiedenen Takte werden im Kennzeichenumsetzergerät sowohl im zentralen Kennzeichenumsetzer als auch in den Kanaleinheiten zur Erfüllung der vermittlungstechnischen als auch übertragungstechnischen Aufgaben benötigt. Die Takte im zentralen Kennzeichenumsetzer sollen zu den Takten in den Kanaleinheiten phasengleich sein.

Eine erste Lösungsmöglichkeit liegt darin, daß alle in den Kanaleinheiten erforderlichen Takte über eine Vielzahl von Taktleitungen vom zentralen Kennzeichenumsetzer zur Verfügung gestellt werden. Zur Vermeidung des hierfür erforderlichen umfangreichen Taktleitungsbündels besteht eine zweite Lösungsmöglichkeit darin, nur den höchsten und niedrigsten in der Kanaleinheit benötigten Takt über getrennte Taktleitungen zu führen und in den Kanaleinheiten aus dem höchsten Takt durch entsprechende Frequenzteilung die weiteren Takte abzuleiten. Hierbei tritt jedoch das Problem auf, daß die in den Kanaleinheiten und im zentralen Kennzeichenumsetzer vorgenommenen Frequenzteilungen nicht phasengleich zueinander durchgeführt werden.

Eine einfache Möglichkeit zur Herstellung der Phasengleichheit besteht darin, daß die Frequenzteiler zwangssynchronisiert werden. Diese Zwangssynchronisation wird entsprechend dem Kennzeichenrahmentakt von 500 Hz alle 2 ms vorgenommen. Durch Störungen innerhalb des Übertragungsnetzes können jedoch Impulse eingekoppelt werden, welche in den Kanaleinheiten zu entsprechender Verschiebung der einzelnen Kanäle des Pulsrahmens führen können, so daß bei der Sprachsignalübertragung hörbare Knackgeräusche auftreten können. Bei der Sprachsignalübertragung wird dadurch lediglich kurzzeitig die Sprachverständlichkeit beeinträchtigt, bei der Übertragung von Datensignalen im Zeitmultiplex-Übertragungssystem führen solche Bitversetzungen jedoch zu Fehlern bei der Datenverarbeitung.

Ähnliche Probleme treten in großen Vermittlungsstellen auf, in denen Peripheriegeräte mit dezentralen Steuereinrichtungen (zweite Einrichtungen) von einer zentralen Steuereinrichtung (erste Einrichtung) aus gesteuert werden.

Der Erfindung liegt die Aufgabe zugrunde, eine Schaltungsanordnung zur Synchronisation von Einrichtungen in den Vermittlungs- und Verstärkerstellen eines Zeitmultiplex-Übertragungssystems derart anzugeben, daß mit geringem Schaltungsaufwand die Takte in den zweiten Einrichtungen phasensynchron zu den Takten der ersten Einrichtung sind.

Diese Aufgabe wird erfindungsgemäß durch eine Schaltungsanordnung mit den Merkmalen des Patentanspruchs 1 gelöst.

Die erfindungsgemäße Schaltungsanordnung weist die Vorteile auf, daß die Frequenzteiler zueinander phasensynchron sind und daß zur Sicherstellung dieser Phasengleichheit nur eine geringe Anzahl von Taktleitungen zwischen den ersten und zweiten Einrichtungen erforderlich ist und daß der zusätzliche Schaltungsaufwand für die Verknüpfungsschaltung gering ist. Weiterhin weist die erfindungsgemäße Schaltungsanordnung den Vorteil auf, daß in der Verknüpfungsschaltung ein Signal abgreifbar ist, welches den Außersynchronismus anzeigt.

Bevorzugte Ausgestaltungen der Schaltungsanordnung sind in weiteren Patentansprüchen angegeben.

Die Erfindung wird im folgenden an Hand einer in der Zeichnung dargestellten Ausführungsform näher beschrieben und erläutert. Es zeigt:
Fig. 1 eine Ausführungsform der erfindungsgemäßen Synchronisationsschaltung und
Fig. 2 Impulsdiagramme der Synchronisationsschaltung nach Fig. 1.

Die erfindungsgemäße Synchronisationsschaltung wird im folgenden für den Anwendungsfall in einem Kennzeichenumsetzergerät des Zeitmultiplex-Übertragungssystems PCM 30 näher beschrieben und erläutert.

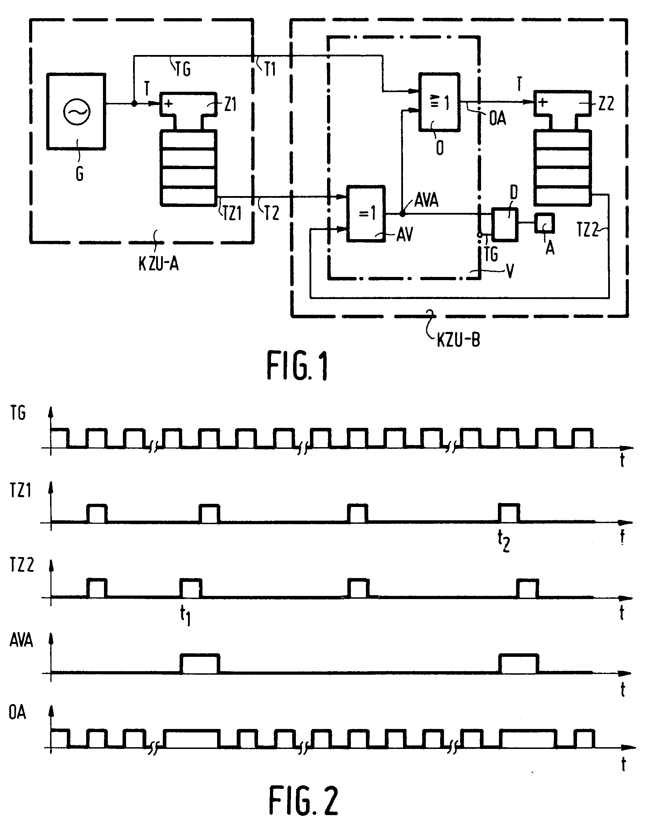

Im zentralen Kennzeichenumsetzer KZU-A ist ein Grundtakt-Generator G und ein erster Frequenzteiler Z1 angeordnet. Der zentrale Kennzeichenumsetzer KZU-A ist mittels Taktleitungen T1 und T2 mit Kanaleinheiten KZU-B verbunden. In den Kanaleinheiten KZU-B, von denen in Fig. 1 eine dargestellt ist, sind jeweils eine Verknüpfungsschaltung V und ein zweiter Frequenzteiler Z2 angeordnet.

Als Frequenzteiler Z1 und Z2 werden vorzugsweise Zähler benutzt. Die Verknüpfungsschaltung V weist ein Antivalenz-Glied AV und ein ODER-Glied 0 auf.

Der Takt TG des Grundtakt-Generators G wird sowohl dem ersten Zähler Z1 als auch über die Taktleitung T1 dem ODER-Glied 0 zugeführt. Die Taktfrequenz des Takts TG liegt bei 2048 kHz und der erste Zähler teilt diese Taktfrequenz bis 500 Hz herunter. Dieser Takt TZ1 am Ausgang der letzten Zählerstufe des ersten Zählers Z1 wird über die Taktleitung T2 einem ersten Eingang des Antivalenz-Glieds AV zugeführt. Der zweite Eingang des Antivalenz-Glieds AV ist mit der letzten Zählerstufe des zweiten Zählers Z2 verbunden. Die Taktfrequenz TZ2 der letzten Zählerstufe liegt ebenfalls bei 500 Hz.

Der Ausgang AVA des Antivalenz-Glieds AV ist mit einem Eingang des ODER-Glieds 0 verbunden, an dessen anderem Eingang der über die Taktleitung T1 zugeführte Takt TG des Grundtakt-Generators G anliegt. Der Ausgang OA des ODER-Glieds 0 ist an den Takteingang T des zweiten Zählers Z2 angeschlossen.

Die Funktionsweise der Verknüpfungsschaltung V wird im folgenden an Hand der in Fig. 2 dargestellten Impulsdiagramme näher beschrieben und erläutert. Die Takte TG, TZ1 und TZ2 sind bis zum Zeitpunkt t₁ phasensynchron zueinander. Am Ausgang AVA des Antivalenz-Glieds AV ist ein Signal mit logisch-0-Zustand abgreifbar, d. h., am Ausgang AVA treten keine Impulse auf.

Durch den Phasenunterschied zwischen den Takten TZ1 bzw. TZ2 am Ausgang des ersten bzw. zweiten Frequenzteilers Z1 bzw. Z2 geht das Signal am Ausgang AVA des Antivalenz-Glieds AV in den logisch-1-Kennzustand über. Dieses Signal wird in der am Ausgang AVA angeschlossenen Alarmanzeigeeinrichtung A zur Anzeige einer Störung benutzt, welche über ein D-Kippglied D mit dem Antivalenz-Glied AV in Verbindung steht. Mittels dem D-Kippglied D werden nadelförmige Störimpulse, welche infolge von Laufzeitunterschieden in der Schaltungsanordnung auftreten können, wirksam unterdrückt. Dieses Signal gibt z.B. auch einen Hinweis darauf, wenn der zweite Zähler Z2 ausgefallen ist.

Der Kennzustandswechsel im Signal am Ausgang AVA führt dazu, daß der dem Takteingang T zugeführte Takt des Zählers Z2 angehalten wird (siehe Fig. 2, Zeitpunkte t₁ und t₂). Dadurch werden auf überraschend einfache Art und Weise einerseits kurzzeitige nichtsynchrone Zustände erfaßt, andererseits die Phasengleichheit der Frequenzteiler bzw. Zähler Z1 und Z2 sichergestellt.

## Patentansprüche

1. Schaltungsanordnung zur Synchronisation von Einrichtungen in den Vermittlungs- und Verstärkerstellen eines Zeitmultiplex-Übertragungssystems mit einem in einer ersten Einrichtung (KZU-A) angeordneten Grundtakt-Generator (G), mit einer mit diesem verbundenen Teilerschaltung und mit Taktleitungen (T1, T2, ...) zur Übertragung der Takte zu den an die erste Einrichtung (KZU-A) angeschlossenen zweiten Einrichtungen (KZU-B), dadurch gekennzeichnet, daß die Teilerschaltung einen in der ersten Einrichtung (KZU-A) angeordneten ersten Frequenzteiler (Z1) und jeweils einen in der zweiten Einrichtung (KZU-B) angeordneten zweiten Frequenzteiler (Z2) aufweist und daß der Takt (TG) des Grundtakt-Generators (G) und der Takt (TZ1) am Ausgang des ersten Frequenzteilers (Z1) über die Taktleitungen (T1, T2) einer in den zweiten Einrichtungen (KZU-B) angeordneten Verknüpfungsschaltung (V) zugeführt werden, welche mit dem zweiten Frequenzteiler (Z2) verbunden ist.

2. Schaltungsanordnung nach Anspruch 1, dadurch gekennzeichnet, daß als Frequenzteiler (Z1, Z2) Zähler benutzt werden und daß die Verknüpfungsschaltung (V) ein Antivalenz-Glied (AV), an dessen Eingängen einerseits der Takt (TZ1) am Ausgang der letzten Zählerstufe des ersten Zählers (Z1) andererseits der Takt (TZ2) am Ausgang der letzten Zählerstufe des zweiten Zählers (Z2) anliegt, und ein ODER-Glied (0) aufweist, an dessen einen Eingang der Takt (TG) des Grundtakt-Generators (G) anliegt und dessen anderer Eingang mit dem Ausgang (AVA) des Antivalenz-Glieds (AV) sowie dessen Ausgang (UA) mit dem Takteingang (T) des zweiten Zählers (Z2) verbunden sind.

3. Schaltungsanordnung nach Anspruch 2, dadurch gekennzeichnet, daß am Ausgang (AVA) des Antivalenz-Glieds (AV) ein D-Kippglied (D) angeschlossen ist, dessen Ausgang mit einer Alarmanzeigeeinrichtung (A) verbunden ist.

4. Schaltungsanordnung nach Anspruch 1, gekennzeichnet durch die Anwendung im Zeitmultiplex-Übertragungssystem PCM 30 und durch die Anordnung des ersten Frequenzteilers (Z1) im zentralen Kennzeichenumsetzer (KZU-A) und der zweiten Frequenzteiler (Z2) sowie der Verknüpfungsschaltungen (V) in den Kanaleinheiten (KZU-B).

## Claims

1. Circuit arrangement for synchronizing a plurality of units in the switching exchanges and repeaters of a time-division multiplex transmission system, the arrangement comprising a basic clock signal generator G arranged in a first unit (KZU-A), a divider circuit connected to said basic clock signal generator, and clock lines (T1, T2, ...) for transmitting the clock signals to the second units (KZU-B) connected to the first unit (KZU-A), characterized in that the divider circuit comprises a first frequency divider (Z1) arranged in the first unit (KZU-A) and a second frequency divider (Z2) arranged in each of the second units (KZU-B) and in that the clock signal (TG) of the basic clock signal generator (G) and the clock signal (TZ1) at the output of the first frequency divider (Z1) are applied *via* the clock lines (T1, T2) to a combining circuit (V) arranged in one of the second units (KZU-B), which combining circuit is connected to the second frequency divider (Z2).

2. Circuit arrangement as claimed in Claim 1, characterized in that counters are used for frequency dividers (Z1, Z2) and in that the combining circuit (V) has an exclusive-OR circuit (AV), to whose inputs are applied the clock signal (TZ1) coming from the output of the last counter stage of the first counter (Z1) and also the clock signal (TZ2) coming from the output of the last counter stage of the second counter (Z2), and has an OR circuit (0), to whose one input is applied the clock signal (TG) coming from the basic clock signal generator (G) and whose second input is connected to the output (AVA) of the exclusive-OR circuit (AV) and whose output (UA) is connected to the clock signal input (T) of the second counter (Z2).

3. Circuit arrangement as claimed in Claim 2, characterized in that a D-flip-flop (D) is connected to the output (AVA) of the exclusive-OR circuit (AV), the output of this D-flip-flop being connected to an alarm display device (A).

4. Circuit arrangement as claimed in Claim 1, characterized by the use in the time-division multiplex transmission system PCM 30 and by the arrangement of the first frequency divider (Z1) in the central signalling character converter (KZU-A) and the second frequency divider (Z2) as well as the combining circuits (V) in the channel units (KZU-B).

## Revendications

1. Montage de circuit pour la synchronisation de dispositifs dans les stations de commutation et d'amplification d'un système de transmission à multiplexage par répartition dans le temps, comportant un générateur de rythme de base (G) installé dans un premier dispositif (KZU-A), un circuit diviseur connecté à ce générateur et des lignes d'impulsions de rythme (T1, T2, ...) pour transmettre les impulsions de rythme aux seconds dispositifs (KZU-B) connectés au premier dispositif (KZU-A), caractérisé en ce que le circuit diviseur comporte un premier diviseur de fréquence (Z1) installé dans le premier dispositif (KZU-A) et un second diviseur de fréquence (Z2) installé dans chacun des seconds dispositifs (KZU-B) et que l'impulsion de rythme (TG) du générateur de rythme de base (G) et l'impulsion de rythme (TZ1) à la sortie du premier diviseur de fréquence (Z1) sont acheminées via des lignes d'impulsions de rythme (T1, T2) à un circuit de combinaison (V) installé dans les seconds dispositifs (KZU-B), ce circuit étant connecté au second diviseur de fréquence (Z2).

2. Montage de circuit selon la revendication 1, caractérisé en ce qu'on utilise des compteurs comme diviseurs de fréquence (Z1, Z2) et le circuit combinatoire (V) comporte un élément anti-coïncidence (AV) aux entrées duquel sont appliquées, d'une part, l'impulsion de rythme (TZ1) qui se trouve à la sortie du dernier étage du premier compteur (Z1) et, d'autre part, l'impulsion de rythme (TZ2) qui se trouve à la sortie du dernier étage du second compteur (Z2), et un élément OU (O) à une entrée duquel est appliquée l'impulsion de ryhtme (TG) du générateur de rythme de base (G) et dont l'autre entrée est connectée à la sortie (AVA) de l'élément anti-coïncidence (AV) tandis que la sortie (UA) est connectée à l'entrée d'impulsions de rythme (T) du second compteur (Z2).

3. Montage de circuit selon la revendication 2, caractérisé en ce qu'à la sortie (AVA) de l'élément anti-coïncidence (AV) est connectée une bascule (D) dont la sortie est connectée à un dispositif d'affichage d'alarme (A).

4. Montage de circuit selon la revendication 1, caractérisé en ce qu'il est utilisé dans le système de transmission à multiplexage par répartition dans le temps PCM 30 et en ce que le premier diviseur de fréquence (Z1) est installé dans le convertisseur de caractéristiques central (KZU-A) et le second diviseur de fréquence (Z2) ainsi que le circuit combinatoire (V), dans les canaux (KZU-B).
